# FASCICULE DE BREVET EUROPEEN

(11) **EP 0 822 118 B1**
(45) Date de publication et mention de la délivrance du brevet: **23.05.2001**
(21) Numéro de dépôt: 97401844.2
(22) Date de dépôt: 31.07.1997
(51) Int. Cl.: B60Q 1/068, F16B 19/00

(54) **Elément de fixation intermédiaire pour le montage d'un réflecteur sur une partie d'appui d'un projecteur**
Zwischenstück zum Reflektoreinbau auf ein Auflagelement eines Scheinwerfers
Intermediate element for mounting a reflector on a supporting member of a headlamp

(30) Priorité: 31.07.1996 FR 9609650
(43) Date de publication de la demande: 04.02.1998
(73) Titulaire: VALEO VISION, 93000 Bobigny (FR)
(72) Inventeur: Zucar, Juan, 94004 Créteil (FR); Cano, Amador, 94004 Créteil (FR)
(74) Mandataire: Le Forestier, Eric

(56) Documents cités:
- EP-A- 0 596 428
- CH-A- 344 549
- DE-A- 2 917 476
- US-A- 3 810 279

## Description

La présente invention concerne de manière générale le montage d'un réflecteur sur une partie d'appui d'un projecteur de véhicule automobile.

Plus particulièrement, elle concerne un projecteur de véhicule automobile comprenant un réflecteur monté sur une partie d'appui par l'intermédiaire d'un élément de fixation intermédiaire présentant une première extrémité apte à coopérer avec ladite partie d'appui et une deuxième extrémité apte à coopérer avec une partie de montage dudit réflecteur selon une direction de montage/démontage X.

L'invention concerne également un élément de fixation intermédiaire pour un tel montage.

On connaît déjà des projecteurs avec ou sans boîtier, dans lesquels le réflecteur est monté par l'intermédiaire d'une tige de montage dont une extrémité est vissée ou bien fixée dans une partie fixe du projecteur. Une telle tige de montage comporte à son autre extrémité un tête sphérique apte à être encliquetée dans une tourelle de montage du réflecteur. Pour permettre la coopération de la tête sphérique de la tige de montage avec la tourelle de montage du réflecteur, il est nécessaire que ladite tourelle de montage comprenne un aménagement spécifique, du type logement sphérique de forme complémentaire de celle de ladite tête sphérique.

En outre, on connaît un projecteur de véhicule automobile dans lequel le réflecteur est monté par l'intermédiaire d'une douille de montage sur une partie d'appui du projecteur. Cette douille de montage comporte une languette de montage qui s'étend selon la direction de montage/démontage de ladite douille dans la tourelle de montage du réflecteur. La languette de montage comprend à son extrémité une dent d'encliquetage destinée à s'encliqueter sur la paroi externe de ladite tourelle de montage lors de l'engagement de la douille de montage dans ladite tourelle selon ladite direction de montage/démontage.

On connaît du document EP-A- 0596428 un dispositif d'éclairage de véhicule automobile qui comporte un réflecteur pourvu sur sa partie arrière d'une partie de montage apte à coopérer avec un élément de fixation intermédiaire selon le préambule de la revendication 8, dont une extrémité se monte sur une partie d'appui du projecteur selon le préambule de la revendication 1, et une deuxième extrémité coopère avec ladite partie de montage du réflecteur. Cet élément de fixation intermédiaire comporte d'une part un premier élément qui s'engage à l'intérieur de la partie de montage et dont la surface externe coopère par friction avec la paroi interne de la partie de montage du réflecteur, et d'autre part un second élément tubulaire qui recouvre la surface externe de la partie de montage du réflecteur et qui est connecté par encliquetage au premier élément de l'élément de fixation intermédiaire.

Dans tous les projecteurs précités de types connus, pour le montage du réflecteur, il est nécessaire de réaliser une tourelle de montage de forme spécifique permettant sa coopération avec un élément de fixation intermédiaire qui dans le dernier cas précité est de forme complexe, ce qui implique des étapes de réalisation du réflecteur plus complexes et finalement un surcoût de fabrication du projecteur ainsi réalisé.

Afin de pallier aux inconvénients de l'état de la technique, la présente invention propose un nouveau projecteur de véhicule automobile du type précité dans lequel le montage du réflecteur sur une partie d'appui du projecteur est particulièrement simple et économique.

Selon une caractéristique essentielle du projecteur selon la revendication 1 et de l'élément de fixation selon la revendication 8, conforme à l'invention, ledit élément de fixation intermédiaire comporte des ailettes élastiquement déformables s'étendant généralement de manière sensiblement transversale à ladite direction de montage/démontage X et étant aptes à venir en prise avec une surface lisse de ladite partie de montage du réflecteur, en se déformant pour retenir par friction ledit élément de fixation intermédiaire sur ladite partie de montage du réflecteur.

Suivant un mode de réalisation du projecteur selon l'invention, chaque ailette élastiquement déformable se présente sous la forme d'un anneau délimité, d'une part, par une surface supérieure tournée vers la partie d'appui, s'étendant transversalement à la direction de montage/démontage X et, d'autre part, par une surface inférieure tournée vers le réflecteur, s'étendant selon une direction oblique Y à ladite direction de montage/démontage X suivant un sens opposé au sens de montage F₁ dudit élément de fixation intermédiaire sur ladite partie de montage du réflecteur, en direction de ladite surface lisse.

Suivant un mode de réalisation avantageux du projecteur selon l'invention, l'élément de fixation intermédiaire comprend un corps cylindrique pourvu sur sa surface extérieure desdites ailettes élastiquement déformables, ledit corps étant apte à être engagé selon ladite direction de montage/démontage X à l'intérieur d'un trou borgne à paroi lisse de ladite partie de montage du réflecteur de sorte que lesdites ailettes viennent en prise avec ladite paroi lisse du trou borgne en se déformant pour s'incliner selon une direction oblique par rapport à ladite direction de montage/démontage X suivant un sens opposé au sens d'engagement F₁ dudit corps dans ledit trou borgne.

La description qui va suivre en regard des dessins annexés donnés à titre d'exemples non limitatifs, fera bien comprendre en quoi consiste l'invention et comment elle peut être réalisée.

Sur les dessins annexés :
- la figure 1 est une vue de côté d'un élément de fixation intermédiaire selon l'invention,
- la figure 2 est une vue en coupe longitudinale de l'élément de fixation intermédiaire de la figure 1,
- la figure 3 est une vue de détail en coupe d'une ailette de l'élément de fixation intermédiaire de la figure 1,
- la figure 4 représente l'engagement de l'élément intermédiaire de fixation vu en coupe longitudinale de la figure 1 dans une partie de montage,
- la figure 5 représente un essai de démontage de l'élément de fixation intermédiaire vu en coupe de la figure 1 de ladite partie de montage.

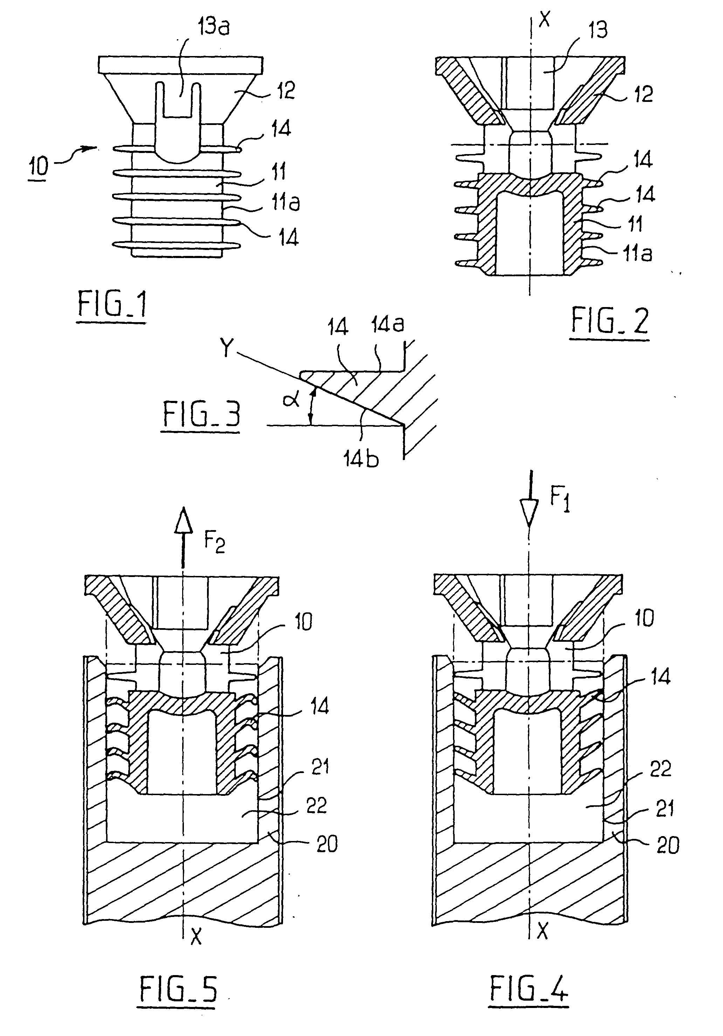

Sur les figures 1 et 2, on a représenté un élément de fixation intermédiaire 10 destiné notamment au montage d'un réflecteur (non représenté) sur une partie d'appui d'un projecteur de véhicule automobile (non représenté).

Cet élément de fixation intermédiaire 10 s'étend selon une direction générale X qui est la direction de montage/démontage dudit élément de fixation intermédiaire sur une partie de montage 20 du réflecteur (non représenté). Il comporte une première extrémité 12 apte à coopérer avec la partie d'appui (non représentée) du projecteur.

On entend par partie d'appui, par exemple une tige de réglage montée à translation sur une partie fixe (non représentée) du projecteur tel qu'un boîtier de projecteur ou une partie de la carrosserie, ou par exemple une tige de montage fixée sur une partie fixe d'un projecteur.

La première extrémité 12 dudit élément de fixation intermédiaire 10 comporte un logement 13 qui s'étend généralement selon la direction de montage/démontage X dudit élément de fixation intermédiaire et qui présente une ouverture vers l'extérieur. Les parois latérales dudit logement 13 sont pourvues de découpes formant des languettes élastiques 13a pour le cloquage du logement 13 de l'extrémité 12 sur la sphère d'extrémité d'une tige de réglage ou de montage du projecteur.

En outre, l'élément de fixation intermédiaire 10 représenté sur les figures 1 et 2 comporte un corps 11, ici un corps cylindrique creux s'étendant selon la direction de montage/démontage X, qui est pourvu sur sa surface extérieure 11a d'une pluralité d'ailettes 14 élastiquement déformables. Ces ailettes 14 sont réparties régulièrement sur la longueur dudit corps 11. Les ailettes 14 s'étendent généralement de manière sensiblement transversale à la direction de montage/démontage X et sont aptes (voir plus particulièrement les figures 4 et 5 décrites ultérieurement) à venir en prise avec une surface lisse 21 de la partie de montage 20 du réflecteur, en se déformant pour retenir par friction l'élément de fixation intermédiaire sur la partie de montage.

Chaque ailette 14 se présente sous la forme d'un anneau entourant ledit corps 11. Cet anneau est délimité par une surface supérieure 14a tournée vers la partie d'appui et une surface inférieure 14b tournée vers le réflecteur. Comme le montre plus particulièrement la figure 3, la surface supérieure 14a de chaque anneau 14 s'étend transversalement à ladite direction de montage/démontage X et la surface inférieure 14b s'étend selon une direction oblique Y à ladite direction de montage/démontage X suivant un sens opposé au sens de montage F₁ (voir figure 4) dudit élément de fixation intermédiaire 10 sur la partie de montage 20 du réflecteur, en direction de ladite surface lisse 21.

En particulier, la surface inférieure 14b de chaque ailette 14 forme un angle a avec la direction transversale à ladite direction de montage/démontage X. Cet angle a présente une valeur de l'ordre de 7 degrés.

L'élément de fixation intermédiaire 10 est réalisé dans une matière thermoplastique présentant une certaine élasticité.

Comme le montre la figure 4, le corps 11 de l'élément de fixation intermédiaire 10 est engagé à l'intérieur d'un trou borgne 22 d'une partie de montage 20 d'un réflecteur (non représenté), et comme celui-ci muni des ailettes présente un diamètre externe supérieur a u diamètre interne dudit trou borgne, les ailettes 14 élastiquement déformables viennent en prise avec la paroi lisse 21 dudit trou borgne 22 en se déformant de manière à s'incliner selon une direction oblique plus accentuée que ladite direction oblique Y de départ par rapport à la direction de montage/démontage X suivant un sens opposé au sens de montage ou d'engagement F₁ dudit corps 11 dans ledit trou borgne 22.

Les ailettes 14 permettent ainsi de retenir par friction ledit élément de fixation intermédiaire 10 sur ladite partie de montage 20.

Lorsque, comme le montre plus particulièrement la figure 5, on essaie de démonter l'élément de fixation intermédiaire 10 de la partie de montage 20 en tirant vers l'extérieur le corps 11 de l'élément de fixation intermédiaire du trou borgne 22, les ailettes 14 se déforment en se courbant de telle sorte que les extrémités desdites ailettes se fixent dans la paroi lisse 21 dudit trou borgne 22 en s'opposant au mouvement d'extraction vers l'extérieur selon le sens F₂ dudit élément de fixation intermédiaire 10.

L'assemblage du réflecteur et dudit élément de fixation intermédiaire est indémontable, le démontage de l'élément de fixation intermédiaire ne pouvant se produire sans entraîner la rupture des ailettes et la détérioration dudit élément de fixation intermédiaire.

La présente invention n'est nullement limitée au mode de réalisation décrit et représenté.

## Revendications

1. Projecteur de véhicule automobile comprenant un réflecteur monté sur une partie d'appui par l'intermédiaire d'un élément de fixation intermédiaire (10) présentant une première extrémité (12) apte à coopérer avec ladite partie d'appui et une deuxième extrémité (11) apte à coopérer avec une partie de montage (20) dudit réflecteur selon une direction de montage/démontage X, ledit élément de fixation intermédiaire (10) comportant des protubérances s'étendant généralement de manière sensiblement transversale à ladite direction de montage/démontage X et étant aptes à venir en prise avec une surface (21) de ladite partie de montage (20) du réflecteur, pour retenir ledit élément de fixation intermédiaire (10) sur ladite partie de montage (20) du réflecteur caractérisé en ce que la surface est lisse et les protubérances sont des ailettes (14) élastiquement déformables aptes à se déformer pour retenir l'élément sur la partie de montage par friction.

2. Projecteur selon la revendication 1, caractérisé en ce que chaque ailette (14) élastiquement déformable se présente sous la forme d'un anneau délimité, d'une part, par une surface supérieure (14a) tournée vers la partie d'appui, s'étendant transversalement à la direction de montage/démontage X, et, d'autre part, par une surface inférieure (14b) tournée vers le réflecteur, s'étendant selon une direction oblique Y à ladite direction de montage/démontage X suivant un sens opposé au sens de montage F₁ dudit élément de fixation intermédiaire (10) sur ladite partie de montage (20) du réflecteur, en direction de ladite surface lisse (21).

3. Projecteur selon la revendication 2, caractérisé en ce que la surface inférieure (14b) de chaque ailette (14) forme un angle α avec la direction transversale à ladite direction de montage/démontage X de l'ordre de 7 degrés.

4. Projecteur selon l'une quelconque des revendications 1 à 3, caractérisé en ce que l'élément de fixation intermédiaire (10) comprend un corps (11) cylindrique pourvu sur sa surface extérieure (11a) desdites ailettes (14) élastiquement déformables, ledit corps (11) étant apte à être engagé selon ladite direction de montage/démontage X à l'intérieur d'un trou borgne (22) à paroi lisse (21) de ladite partie de montage (20) du réflecteur de sorte que lesdites ailettes (14) viennent en prise avec ladite paroi lisse (21) du trou borgne (22) en se déformant pour s'incliner selon une direction oblique par rapport à ladite direction de montage/démontage X suivant un sens opposé au sens d'engagement F₁ dudit corps (11) dans ledit trou borgne (22).

5. Projecteur selon l'une quelconque des revendications 1 à 4, caractérisé en ce que la première extrémité (12) dudit élément de fixation intermédiaire (10) est agencée de manière à pouvoir être cloquée sur la sphère d'extrémité d'une tige de réglage montée à translation sur une partie fixe du projecteur.

6. Projecteur selon l'une quelconque des revendications 1 à 4, caractérisé en ce que la première extrémité (12) dudit élément de fixation intermédiaire (10) est agencée de manière à pouvoir être cloquée sur la sphère d'extrémité d'une tige de montage fixée sur une partie fixe du projecteur.

7. Projecteur selon l'une quelconque des revendications 1 à 6, caractérisé en ce que l'élément de fixation intermédiaire (10) est réalisé dans une matière thermoplastique présentant une légère élasticité.

8. Elément de fixation intermédiaire (10) destiné au montage d'un réflecteur sur une partie d'appui d'un projecteur de véhicule automobile, présentant une première extrémité (12) apte à coopérer avec ladite partie d'appui et une deuxième extrémité (11) apte à coopérer avec une partie de montage (20) dudit réflecteur selon une direction de montage/démontage X, l'élément comportant des protubérances s'étendant généralement de manière sensiblement transversale à ladite direction de montage/démontage X et étant aptes à venir en prise avec une surface lisse (20) de ladite partie de montage (20) du réflecteur, pour retenir ledit élément de fixation intermédiaire (10) sur ladite partie de montage (20) caractérisé en ce que les protubérances sont des ailettes (14) élastiquement déformables aptes à se déformer pour retenir l'élément sur la partie de montage par friction.

## Patentansprüche

1. Kraftfahrzeugscheinwerfer mit einem Reflektor, der an einem Auflageteil mit Hilfe eines Zwischenbefestigungselementes (10) befestigt ist, das ein erstes Ende (12), welches mit dem genannten Auflageteil zusammenwirken kann, sowie ein zweites Ende (11) aufweist, das mit einem Montageteil (20) des Reflektors in einer Montage-/Demontagerichtung X zusammenwirken kann, wobei das genannte Zwischenbefestigungselement (10) Ausstülpungen aufweist, die sich im wesentlichen mehr oder weniger quer zu dieser Montage-/Demontagerichtung X erstrecken und in eine Fläche (21) dieses Montageteils (20) des Reflektors eingreifen können, um dieses Zwischenbefestigungselement (10) an diesem Montageteil (20) des Reflektors zu halten,
dadurch gekennzeichnet, dass die Fläche glatt ist und es sich bei den Ausstülpungen um elastisch verformbare Rippen (14) handelt, die sich verformen können, um das Element mittels Reibung an dem Montageteil zu halten.

2. Scheinwerfer nach Anspruch 1,
dadurch gekennzeichnet, dass jede elastisch verformbare Rippe (14) die Form eines Rings aufweist, der einerseits von einer oberen Fläche (14a), die dem Auflageteil zugewandt ist und sich quer zur Montage-/Demontagerichtung X erstreckt, und andererseits von einer unteren Fläche (14b) begrenzt wird, die dem Reflektor zugewandt ist und die sich in einer schräg zu dieser Montage-/Demontagerichtung X verlaufenden Richtung Y in entgegengesetzter Richtung zur Montagerichtung F₁ des Zwischenbefestigungselementes (10) an diesem Montageteil (20) des Reflektors und in Richtung der genannten glatten Fläche (21) erstreckt.

3. Scheinwerfer nach Anspruch 2,
dadurch gekennzeichnet, dass die untere Fläche (14b) jeder Rippe (14) einen Winkel α von ca. 7 Grad mit der quer zu dieser Montage-/Demontagerichtung X verlaufenden Richtung bildet.

4. Scheinwerfer nach einem der Ansprüche 1 bis 3,
dadurch gekennzeichnet, dass das Zwischenbefestigungselement (10) einen zylindrischen Körper (11) umfaßt, der auf seiner Außenseite (lla) mit den elastisch verformbaren Rippen (14) versehen ist, wobei dieser Körper (11) in Richtung der Montage/Demontagerichtung X ins Innere eines mit glatter Wandung (21) versehenen Sacklochs (22) des Montageteils (20) des Reflektors eingeführt werden kann, so dass die Rippen (14) in diese glatte Wandung (21) des Sacklochs (22) eingreifen und sich dabei so verformen, dass sie sich in einer schräg zu der Montage/Demontagerichtung X verlaufenden Richtung in entgegengesetzter Richtung zur Einführungsrichtung F₁ des Körpers (11) in dieses Sackloch (22) neigen.

5. Scheinwerfer nach einem der Ansprüche 1 bis 4,
dadurch gekennzeichnet, dass das erste Ende (12) des Zwischenbefestigungselementes (10) so ausgebildet ist, dass es auf eine Kugel am Ende einer Einstellungsstange aufgesetzt werden kann, die translatorisch verschiebbar an einem festen Teil des Scheinwerfers montiert ist.

6. Scheinwerfer nach einem der Ansprüche 1 bis 4,
dadurch gekennzeichnet, dass das erste Ende (12) des Zwischenbefestigungselementes (10) so ausgebildet ist, dass es auf eine Kugel am Ende einer Montagestange aufgesetzt werden kann, die an einem festen Teil des Scheinwerfers befestigt ist.

7. Scheinwerfer nach einem der Ansprüche 1 bis 6,
dadurch gekennzeichnet, dass das Zwischenbefestigungselement (10) aus einem thermoplastischen Kunststoff mit geringfügiger Elastizität besteht.

8. Zwischenbefestigungselement (10) zur Montage eines Reflektors an einem Auflageteil eines Kraftfahrzeugscheinwerfers, das ein erstes Ende (12), welches mit dem genannten Auflageteil zusammenwirken kann, sowie ein zweites Ende (11) aufweist, das mit einem Montageteil (20) des Reflektors in einer Montage/Demontagerichtung X zusammenwirken kann, wobei das Element Ausstülpungen aufweist, die sich im wesentlichen mehr oder weniger quer zu dieser Montage-/Demontagerichtung X erstrecken und in eine glatte Fläche (20) dieses Montageteils (20) des Reflektors eingreifen können, um dieses Zwischenbefestigungselement (10) an dem Montageteil (20) zu halten,
dadurch gekennzeichnet, dass es sich bei den Ausstülpungen um elastisch verformbare Rippen (14) handelt, die sich verformen können, um das Element mittels Reibung an dem Montageteil zu halten.

## Claims

1. Motor-vehicle headlight comprising a reflector mounted on a support part by means of an intermediate fixing element (10) featuring a first end (12) able to interact with the said support part and a second end (11) able to interact with a part (20) for mounting of the said reflector along a mounting/dismantling direction X, the said intermediate fixing element (10) including protuberances extending generally substantially transversely to the said mounting/dismantling direction X and being able to come into engagement with a surface (21) of the said part (20) for mounting of the reflector, in order to retain the said intermediate fixing element (10) on the said part (20) for mounting of the reflector, characterised in that the surface is smooth and the protuberances are elastically deformable fins (14) able to be deformed in order to retain the element on the mounting part by friction.

2. Headlight according to Claim 1, characterised in that each elastically deformable fin (14) takes the form of a ring bounded, on the one hand, by an upper surface (14a) turned towards the support part, extending transversely to the mounting/dismantling direction X, and, on the other hand, by a lower surface (14b) turned towards the reflector, extending along a direction Y oblique to the said mounting/dismantling direction X along a direction opposite to the direction F₁ of mounting of the said intermediate fixing element (10) on the said part (20) for mounting of the reflector, towards the said smooth surface (21).

3. Headlight according to Claim 2, characterised in that the lower surface (14b) of each fin (14) forms an angle α with the direction transverse to the said mounting/dismantling direction X of the order of 7 degrees.

4. Headlight according to any one of Claims 1 to 3, characterised in that the intermediate fixing element (10) comprises a cylindrical body (11) provided on its outer surface (11a) with the said elastically deformable fins (14), the said body (11) being able to be engaged along the said mounting/dismantling direction X within a blind hole (22) having a smooth wall (21) of the said part (20) for mounting of the reflector, such that the said fins (14) come into engagement with the said smooth wall (21) of the blind hole (22), being deformed so as to be inclined along a direction which is oblique with respect to the said mounting/dismantling direction X along a direction opposite to the direction F₁ of engagement of the said body (11) into the said blind hole (22).

5. Headlight according to any one of Claims 1 to 4, characterised in that the first end (12) of the said intermediate fixing element (10) is configured in such a way as to be able to be fitted, blister-like, on the spherical end of an adjusting rod mounted so as to be able to translate on a fixed part of the headlight.

6. Headlight according to any one of Claims 1 to 4, characterised in that the first end (12) of the said intermediate fixing element (10) is configured in such a way as to be able to be fitted, blister-like, on the spherical end of a mounting rod fixed onto a fixed part of the headlight.

7. Headlight according to any one of Claims 1 to 6, characterised in that the intermediate fixing element (10) is produced from a thermoplastic material exhibiting slight elasticity.

8. Intermediate fixing element (10) intended for the mounting of a reflector on a support part of a motor-vehicle headlight, featuring a first end (12) able to interact with the said support part and a second end (11) able to interact with a part (20) for mounting of the said reflector along a mounting/dismantling direction X, the element including protuberances extending generally substantially transversely to the said mounting/dismantling direction X and being able to come into engagement with a surface (20) of the said part (20) for mounting of the reflector, in order to retain the said intermediate fixing element (10) on the said mounting part (20), characterised in that the protuberances are elastically deformable fins (14) able to be deformed in order to retain the element on the mounting part by friction.
